# EUROPEAN PATENT SPECIFICATION

(11) **EP 2 972 289 B1**
(45) Date of publication and mention of the grant of the patent: **13.01.2021**
(21) Application number: 14768139.9
(22) Date of filing: 10.02.2014
(51) Int. Cl.: G01N 29/26, G01B 17/06, G01N 29/04

(54) **ULTRASONIC EXAMINATION OF COMPONENTS WITH UNKNOWN SURFACE GEOMETRIES**
ULTRASCHALLPRÜFUNG VON KOMPONENTEN MIT UNBEKANNTEN GEOMETRIEFLÄCHEN
EXAMEN ULTRASONORE DE COMPOSANTS À GÉOMÉTRIES DE SURFACE INCONNUES

(30) Priority: 15.03.2013 US 201313832121
(43) Date of publication of application: 20.01.2016
(73) Proprietor: Westinghouse Electric Company LLC, Cranberry Township, PA 16066 (US)
(72) Inventor: DEVLIN, Russell S., Windsor, Connecticut 06095 (US); MINOGUE, Patrick M., Pittsburgh, Pennsylvania 15215 (US); LAREAU, John P., Granby, Connecticut 06035 (US)
(74) Representative: Gallo, Wolfgang
(86) International application number: PCT/US2014/015512
(87) International publication number: WO 2014/149232

(56) References cited:
- EP-A1- 0 017 744
- EP-A2- 1 927 856
- WO-A1-2012/022886
- JP-A- H06 148 378
- US-A- 4 818 470
- US-A- 5 619 423
- US-A1- 2003 092 990
- US-A1- 2006 195 273
- US-A1- 2008 132 790

## Description

### BACKGROUND

### 1. Field

This embodiment generally pertains to the nondestructive examination of components with unknown geometries and more particularly to the inspection of bolts in aged nuclear reactors.

### 2. Related Art

Implementation of aging management programs by commercial nuclear power reactor operators, has necessitated the verification of the integrity of specific bolts by volumetric examination; typically, by the use of ultrasonic inspection techniques. The use of nondestructive inspection devices which utilize ultrasonic vibrations is well known. Generally, an ultrasonic transducer, typically a piezoelectric crystal which is excited by an electrical pulse, is placed on the surface of the test object or an intermediary wedge that is designed to closely conform to the surface of the object under test and the interface surface of the ultrasonic transducer. In one embodiment, the transducer alternately sends an ultrasonic signal and receives an echo. The piezoelectric crystal converts vibrations from the echo back into an electrical signal which can be interpreted by a control device. The control device may record and/or display the interpreted signal. Where there is a variation of the internal structure of the test object, *e.g*., an internal crack within a metal member under test, the ultrasonic transducer and control device are able to provide an image showing the location and extent of the crack. The ultrasonic transducer and control device, however, suffer from limitations that effect the accuracy of the image. For example, the ultrasonic transducer typically has a contact surface that engages the test object. The contact surface may have a cross sectional area of about 0.50 square inches (3.23 square centimeters). The ultrasonic transducer contact surface should engage the test object in a generally flat manner and the test object should engage substantially all of the ultrasonic transducer contact surface, to assure the ultrasonic beam clearly enters and is not reflected by the surface. In this configuration, the distance the ultrasonic waves and echo travel can be determined and the control device may produce a substantially accurate representation of the test object's internal structure. However, where the test object surface is uneven, the signal/response time is affected and the control device may produce an inaccurate representation of the test object's internal structure.

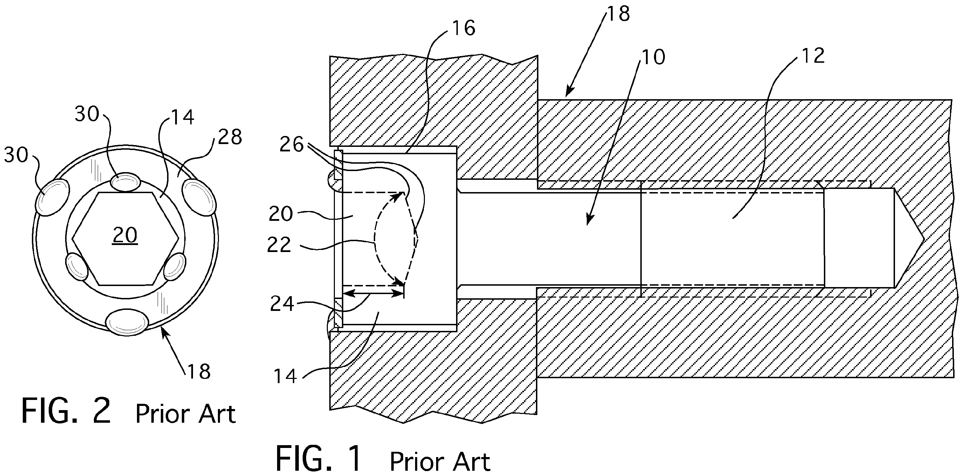

Unfortunately, some of the bolt designs employed in commercial nuclear reactors, for example, internal hex socket screws based on ANSI B 18.3, allow a wide variation in the socket geometry. Furthermore, in some cases, the use of bolt locking devices has resulted in a configuration where the only accessible surface of the bolt is the socket, as can be appreciated from Figures 1 and 2. Figure 1 shows a cross section of an internal hex socket screw 10 having a shank 12 and bolt head 14 that is screwed into a recessed opening 16 in a reactor component 18. The head 14 of the bolt 10 has a central hex opening 20 that may vary widely from bolt to bolt. For example, the cone angle 22 may vary and the lower comers and center position of the bottom of the socket 20 may have flats or fillets 26. Figure 2 shows a plan view of the bolt head 14 having a hex socket 20 that is surrounded by a locking device 28 that is attached to both the bolt head 14 and the reactor component 18 by tack welds 30. Figure 2 illustrates the relatively small area that is available to access some of the bolts 10 for a volumetric inspection.

Application of ultrasonic inspection techniques requires that the geometry of the object being inspected be understood so the complete examination of the part and the correct interpretation of the reflective signals can be assured. Prior art attempts to ultrasonically inspect bolts of the type illustrated in Figures 1 and 2, with conventional ultrasonic techniques have been hampered by the non-uniform part geometries that can exist even among bolts in the same assembly. Inability to verify the integrity of certain bolted joints in nuclear reactors can result in the need to perform costly replacements of these bolts.
Document JPH06148378A discloses a method of examining a bolt anchored in a fixture using an ultrasonic sensor, said bolt having its surface geometry covered by water. The ultrasonic flow detecting inspection equipment can be operated from outside a water chamber and can inspect fitted bolts of which the heads are different in shape.
Document US 2006/0195273 A1 discloses a method and a circuit arrangement for processing signals produced by reflecting ultrasonic waves at effective spots on the structure of an object.
Document WO2012/022886 A1 discloses a method for controlling ultrasonic transducers of an ultrasound probe.
Document EP1 927 856 A2 discloses an ultrasonic inspection method wherein an ultrasonic transducer is operated with a substantial fluid player, such as water, between the transducer and the component surface, which fluid layer may be maintained by immerging the component in liquid.

Accordingly, it is an object of this invention to provide an improved nondestructive method of performing a volumetric examination of a bolt when only a small area of the bolt head is visually observable.

It is a further object of this invention to provide such an inspection technique, ultrasonically, for bolts with varying surface geometries.

In addition, it is an object of this invention to provide such an ultrasonic inspection technique that can effectively be used even when the surface geometry of the bolt is substantially unknown.

### SUMMARY

The foregoing objects are achieved by the method as defined in claim 1 and described hereafter for nondestructively examining a bolt having a recessed socket in a head of the bolt having an unknown or varying surface geometry and with the bolt anchored in a fixture with the surface geometry covered by water. The method includes the step of placing a phased array ultrasonic transducer within or on the water and over the head of the bolt with a beam emitting end of the transducer directed towards the head of the bolt. The method then scans an ultrasonic beam of the phased array through a plurality of combinations of control parameters that alter the beam and monitor a reflected or refracted beam from the volume of the bolt. The method then determines the surface geometry of the head of the bolt from the monitored reflected or refracted beam and adjusts the phased array to operate at a combination of control parameters that produces an optimized beam for the surface geometry determined in the previous step. A scan is then performed of the volume of the bolt employing the optimized beam to determine any defects in the bolt.

Preferably, a sound entry point of the beam on the bolt is in the recessed socket and the scanning and the monitoring steps are performed with the sametransducer. Desirably, the transducer is a linear ultrasonic transducer array. According to the invention the scanning step includes the step of varying an incident angle of the beam as the beam is swept across the surface of the bolt. As the beam is swept across the surface of the bolt, the incident angle is varied about the bolt centerline. The surface geometry of the bolt is determined from the strongest reflections of the ultrasonic signal.

In one embodiment, the step of adjusting the phased array ultrasonic transducer determines which of a plurality of transducer elements are to fire and in which sequence the transducer elements are fired in. Desirably, the step of performing a scan includes the step of rotating the phased array ultrasonic transducer 360° about the centerline of the bolt. Additionally, the adjusting step preferably includes the step of calculating the control parameters that produce the optimized beam based upon the surface geometry determined in the previous determining step.

### BRIEF DESCRIPTION OF THE DRAWINGS

A further understanding of the invention can be gained from the following description of the preferred embodiments when read in conjunction with the accompanying drawings in which:
Figure 1 is a cross sectional view of a portion of a reactor component having an internal hex socket screw inserted within a recessed opening;
Figure 2 is a plan view of the head of the screw shown in Figure 1 captured by a locking device which is tack welded to a portion of the reactor vessel component;
Figure 3 is a schematic view of a phased array ultrasonic testing system which may be employed with the preferred embodiment described hereafter;
Figure 4 is a schematic view of an ultrasonic linear array probe scanning a bolt socket surface to characterize the socket geometry;
Figure 5 is a graphical representation of a result from a surface scan of a bolt socket;
Figure 6 is a graphical representation of a result from a volumetric scan of a bolt with a 140° cone angle after the surface geometry characterization and the generation of appropriate focal laws; and
Figure 7 is a graphical representation of a scan of a bolt with a 170° cone angle after the surface geometry characterization and the generation of appropriate focal laws.

### DESCRIPTION OF THE PREFERRED EMBODIMENT

Nondestructive evaluation methods such as ultrasonic testing are commonly known in the art. In general, high frequency sound waves are applied to the structure being tested using one or more transducers. The transducers typically comprise piezoelectric crystal elements that are excited by an electrical voltage in order to induce the ultrasonic waves in the structure. When the sound waves interact with something (*e.g*., a void, a crack or other defect) having a significant difference in impedance from that of the propagation medium, a portion of the sound is either reflected or diffracted back to the source from which it originated. Detection and quantification of the returned sound pattern is used to determine the characteristics of the reflecting medium. The concepts of ultrasonic testing and, in particular, phased array ultrasonic technology, are explained in further detail in the book entitled "Introduction to Phased Array Ultrasonic Technology Applications," by Michael D. C. Moles et al., R&D Tech, Inc., 2004.

Phased array ultrasonic technology provides for the computer controlled excitation (*e.g*., amplitude and delay) of individual elements in a multi-element probe (as opposed to single elements probes of conventional ultrasonic transducers). The excitation of the piezocomposite elements can generate a focused ultrasonic beam with the potential to modify beam parameters such as angle, focal distance and focal point, through software. Thus, a computer controlled beam scattering pattern can be implemented in order to "steer" (*e.g*., direct) the beam to the area of interest to search for cracks or other discontinuities.

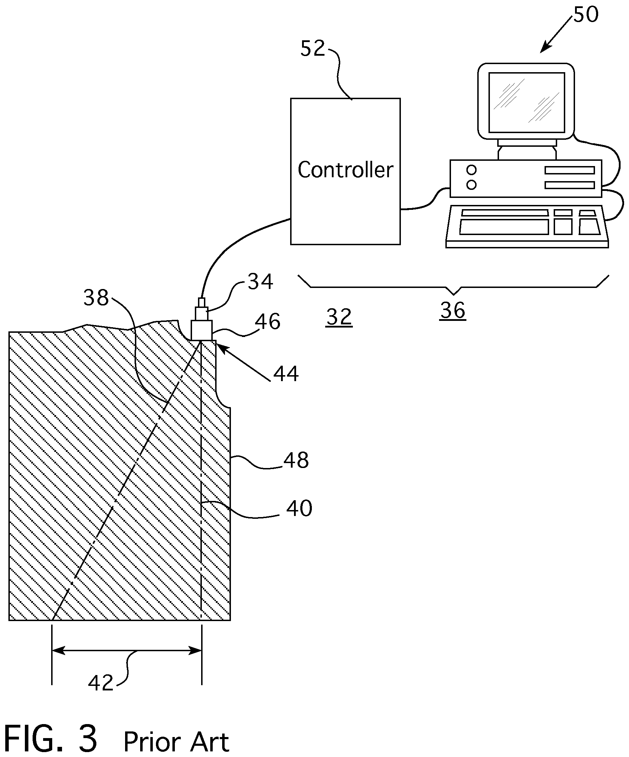

Figure 3 shows a phased array ultrasonic testing system 32 that may be employed with this embodiment. In the example of Figure 3, the system 32 includes at least one ultrasonic transducer or probe 34 in communication with a control system 36 adapted to steer an ultrasonic beam 38, 40 emitted from the probe 34. It should be appreciated that the term "steer" refers to the ability to control or direct the ultrasonic beam (*e.g*., beams 38, 40 of Figure 2). In this manner, the system 50 provides an efficient method wherein an extended area 42 of an object can be inspected from a single probe mounting area 44 using a single probe or transducer 34 and a single wedge 46 for coupling the transducer 34 to the article 48 under inspection.

The beam parameters of the probe 34 are controlled by a control system 36. The exemplary control system 36 includes a computer 50 and a controller 52. The controller 52 can be any known or suitable phased array probe control unit adapted to manipulate the probe 34. More specifically, the computer 50 contains software for programming the controller 52 to manipulate the probe 34 in accordance with a predetermined set of focal laws. In operation, beam parameters, such as, for example, angle, focal distance and focal point, which collectively form the focal laws of the probe 34, can be entered and modified using the computer 50 in order to program the controller 52 to control the probe 34 to perform an examination of the desired portion of the article under inspection 48, in accordance with such focal laws. By way of a non-limiting example, one known phased array probe controller is commercially available under the trade designation IntraPhase, which is available from WesDyne International (a subsidiary of Westinghouse Electric Company LLC, Pennsylvania, USA).

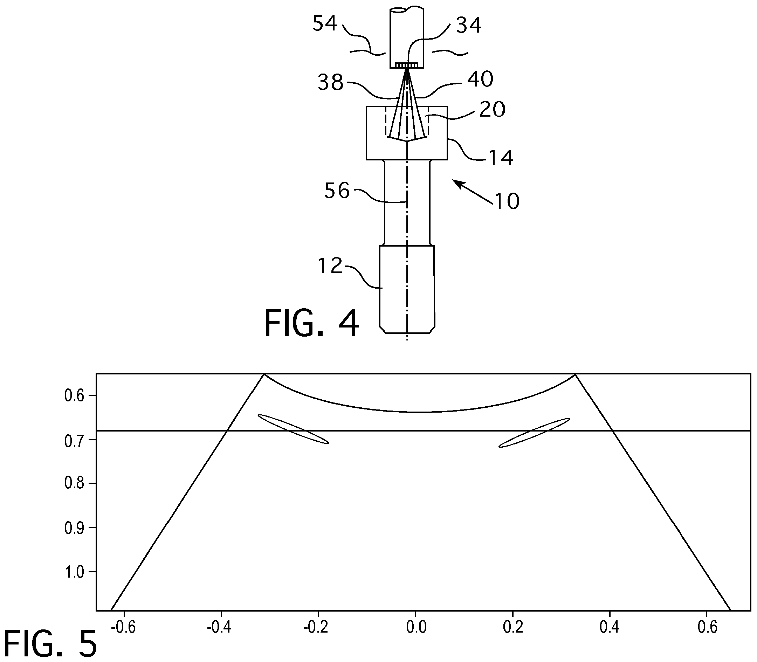

Figure 4 shows a single linear ultrasonic transducer phased array 34 located over a bolt 10 to be inspected. It should be appreciated that like reference characters are employed among the various figures to identify corresponding components. Thus, it can be appreciated from Figure 2, which shows the bolt head 14 surrounded by a locking device 30 which is affixed to the bolt head and reactor component by the tack welds 30, that the only practical area available to inspect the bolt is through the hex socket 20 whose surface geometry is not generally known since it can vary widely as previously mentioned. Accordingly, in accordance with this embodiment, the inspection is performed under water as figuratively shown by reference character 54, with the water used as a coupling medium for the ultrasonic energy in lieu of a wedge, since it is not practical to form a wedge with an interfacing geometry that would closely mate with that of the hex socket. The ultrasonic array is programmed to produce a beam 38, 40 with an incident angle that is varied (swept) as shown about the bolt centerline 56. As the beam sweeps the surface of the bolt, the strongest ultrasonic reflections are obtained when the beam is normal to the bolt's surface. Figure 5 shows a graphical representation of the signal received from a surface scan of the bolt socket. The socket cone angle 22 (shown in Figure 1) can be determined from measuring the angular displacement between the two peak responses. In principal, a bolt with a flat surface would provide a single reflection, and a bolt with a flat surface at the bottom of a cone could provide three reflections.

In accordance with a first embodiment the bolt is first scanned to determine the characteristic geometry at the bottom of the hex socket 20. The phased array parameters, *i.e.*, the focal laws, are adjusted to produce a sound beam optimized for a volumetric inspection of the bolt through socket geometry that was determined from the initial surface scan step. A scan is then performed with the new focal parameters to inspect the volume of the bolt. The scans are generally performed by the same transducer. Thus, the initial scan, performed in accordance with this embodiment provides bolt surface geometry information which is used to calculate the focal laws subsequently employed in the second scan used in the volumetric examination. The calculations which are performed on the results of the first scan can be standardized or automated in a fashion that permits the volumetric inspection scan to be performed immediately after the surface geometry characterizing scan.

After the focal laws are generated for the specific bolt being inspected, an inspection scan is performed using these focal laws, and the probe is rotated 360° about the centerline of the bolt to achieve a full volumetric examination of the bolt.

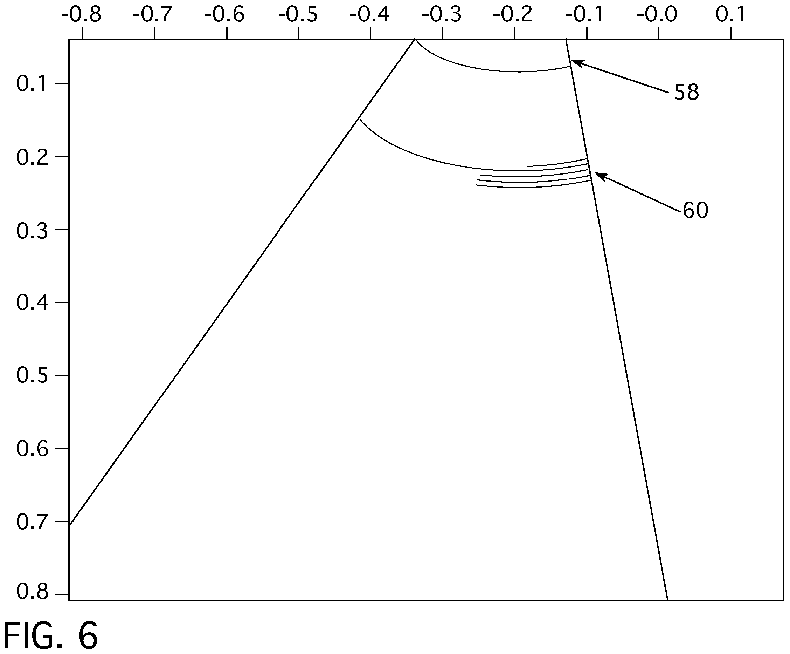

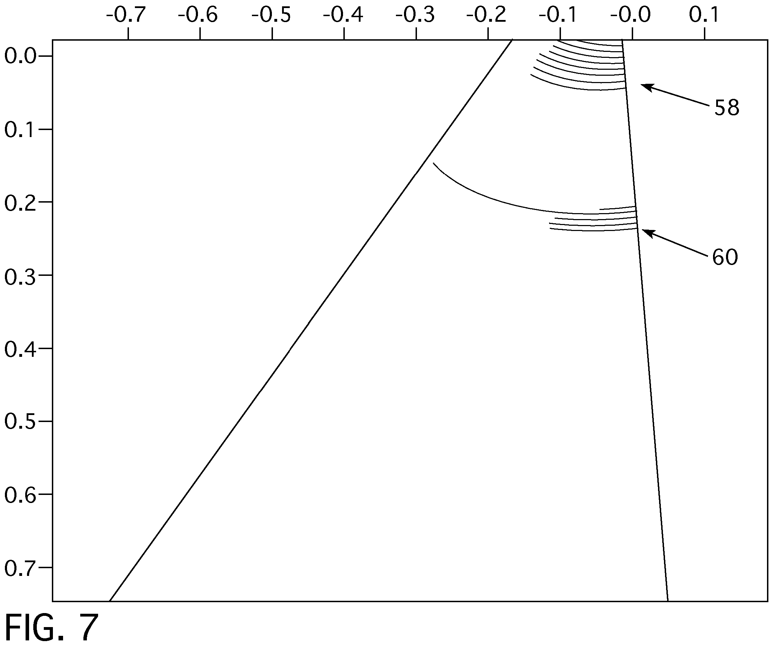

Figures 6 and 7 depict graphical displays of the results of an ultrasonic volumetric inspection of sample test bolts. As an alternate embodiment the results of the first scan can provide the operator with the inside diameter angle geometry, which can be measured directly off of the computer display. The operator can then input that measured angle into the phased array acquisition software so that the subsequent scan is performed with the correct inside diameter geometry input. The operator need not be involved in the actual focal law calculations.

In still another embodiment the operator deviates from the first two embodiments of measuring the bolt socket inside diameter geometry with one scan and then programming an inspection scan corrected for the measured geometry. In the third embodiment the operator acquires the inside diameter bolt geometry on one UT (Ultrasonic Testing) channel of the phased array system and on three additional channels the operator acquires the data required to detect a defect where the setup parameters are preprogrammed and executed for pre-defined zones of the different bold geometries that are likely to be encountered, i.e., channel 2 is setup for measuring bolts with measured angles from 150 degrees to 180 degrees, channel 3 is setup for measuring bolts with measured angles from 140 degrees to 149 degrees and channel 4 is seup for measuring bolts with measured angles from 120 degrees to 139 degrees. So after the one scan has been completed four channels of data have been acquired. Based on the measured angle geometry the operator reads on the first channel the operator identifies which one of the other three channels is to be selected to analyze the condition of the bolt. This third embodiment enables the operator to only have to scan the bolt one time.

Figure 6 shows the scan of a bolt with a 140° cone angle that was obtained after a surface geometry characterization scan and the application of the appropriate focal laws. Reference character 58 identifies the reflection received from the socket surface and reference character 60 indentifies the reflection received from a crack located at the head to shank fillet. Figure 7 shows a scan of a bolt with a 170° cone angle after surface geometry characterization and application of the appropriate focal laws. Note that by first characterizing the surface geometry and using those results to set the focal laws enables the flaw 60 noted at the head to shank fillet to appear the same for both the 170° cone and 140° cone samples despite the 15° difference in the orientation of the sound entry surface.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims.

## Claims

1. A method of nondestructively examining a bolt (10) having a recessed socket (20) in a head (14) of the bolt, the recessed socket having an unknown or varying surface geometry in a bottom of the recessed socket, with the bolt anchored in a fixture (18) and with the surface geometry covered by water as an ultrasonic coupling fluid (54), comprising the steps of:
placing a phased array ultrasonic transducer (34), having a plurality of transducer elements within or on the ultrasonic coupling fluid (54) and over the head (14) of the bolt (10) with a beam emitting end directed towards the head of the bolt;
scanning an ultrasonic beam (38, 40) of the phased array (34) through a plurality of combinations of control parameters that alters the beam so that an incident angle of the beam on the surface geometry in the bottom of the recessed socket is varied about a centerline of the bolt;
monitoring a reflected or refracted beam (58);
determining the surface geometry of the bottom of the recessed socket from the monitored strongest reflected or refracted beam (58);
adjusting the phased array (34) to operate at a combination of control parameters that produces an optimized beam (38, 40) for the surface geometry determined in the previous determining step that produced the strongest reflected or refracted beam; and
performing a scan of a volume of the bolt employing the optimized beam (38, 40) to determine any defects in the bolt (10).

2. The method of Claim 1 wherein a sound entry point of the beam (38, 40) on the bolt (10) is in the recessed socket (20).

3. The method of Claim 1 wherein the scanning and the monitoring steps are performed with the same transducer (34).

4. The method of Claim 1 wherein the transducer (34) is a linear ultrasonic transducer array.

5. The method of Claim 1 wherein the step of performing a scan includes the step of rotating the phased array ultrasonic transducer (34) 360 degrees about the centerline of the bolt (56).

6. The method of Claim 1 wherein the adjusting step includes the step of calculating the control parameters that produce the optimized beam (38, 40) based upon the surface geometry determined in the previous determining step.

## Patentansprüche

1. Verfahren zur zerstörungsfreien Untersuchung eines Schraubbolzens (10) mit einem vertieften Sitz (20) in einem Kopf (14) des Schraubbolzens, wobei der vertiefte Sitz eine unbekannte oder variierende Oberflächengeometrie in einem Boden des vertieften Sitzes aufweist, wobei der Schraubbolzen in einer Haltevorrichtung (18) verankert ist und die Oberflächengeometrie von Wasser als Ultraschallkopplungsfluid (54) bedeckt ist, wobei das Verfahren die Schritte umfasst:
Platzieren eines phasengesteuerten Ultraschall-Messwandlers (34) mit einer Vielzahl von Messwandlerelementen in oder auf dem Ultraschallkopplungsfluid (54) und über dem Kopf (14) des Schraubbolzens (10), wobei ein strahlaussendendes Ende zu dem Kopf des Schraubbolzens hin orientiert ist;
Abtasten eines Ultraschallstrahls (38, 40) der phasengesteuerten Anordnung (34) mit einer Vielzahl von Kombinationen von Steuerparametern, welche den Strahl so verändert, dass ein Einfallswinkel des Strahls auf die Oberflächengeometrie in dem Boden des vertieften Sitzes um eine Mittellinie des Schraubbolzens herum variiert wird;
Überwachen eines reflektierten oder gebrochenen Strahls (58);
Bestimmen der Oberflächengeometrie des Bodens des vertieften Sitzes aus dem stärksten überwachten reflektierten oder gebrochenen Strahl (58);
Einstellen der phasengesteuerten Anordnung (34), so dass sie bei einer Kombination von Steuerparametern arbeitet, die einen optimierten Strahl (38, 40) für die Oberflächengeometrie produziert, die in dem vorhergehenden Bestimmungsschritt bestimmt wurde, welcher den stärksten reflektierten oder gebrochenen Strahl erzeugt hatte; und
Durchführen einer Abtastung eines Volumens des Schraubbolzens unter Einsatz des optimierten Strahls (38, 40), um jegliche Defekte in dem Schraubbolzen (10) zu bestimmen.

2. Verfahren nach Anspruch 1, wobei ein Schalleintragspunkt des Strahls (38, 40) auf dem Schraubbolzen (10) in dem vertieften Sitz (20) liegt.

3. Verfahren nach Anspruch 1, wobei der Abtast- und der Überwachungsschritt mit demselben Messwandler (34) ausgeführt werden.

4. Verfahren nach Anspruch 1, wobei der Messwandler (34) eine lineare Ultraschall-Messwandleranordnung ist.

5. Verfahren nach Anspruch 1, wobei der Schritt zur Durchführung einer Abtastung den Schritt des Drehens des phasengesteuerten Ultraschall-Messwandlers (34) um 360 Grad um die Mittellinie des Schraubbolzens (56) herum umfasst.

6. Verfahren nach Anspruch 1, wobei der Einstellschritt den Schritt des Berechnens der Steuerparameter, die den optimierten Strahl (38, 40) erzeugen, auf Grundlage der Oberflächengeometrie umfasst, die in dem vorhergehenden Bestimmungsschritt bestimmt wurde.

## Revendications

1. Procédé d'examination non-déstructive d'un boulon (10) ayant une douille évidée (20) dans une tête (14) du boulon, la douille évidée ayant une géométrie de surface inconnue ou variante dans un fond de la douille évidée, le boulon étant ancré dans un dispositif de retenue (18) et la géométrie de surface étant couvrée par de l'eau en tant que fluide d'accouplage ultrasonique (54), le procédé comprenant les étapes consistant à :
placer un transducteur ultrasonique en réseau phasé (34) ayant une pluralité d'éléments transducteurs dans le ou sur le fluide d'accouplage ultrasonique (54) et au-dessus de la tête (14) du boulon (10), avec une extrémité d'émission de faisceau orientée vers la tête du boulon ;
balayer un faisceau ultrasonique (38, 40) du réseau phasé (34) avec une pluralité de combinaisons des paramètres de commande qui modifie le faisceau de telle manière qu'un angle d'incidence du faisceau sur la géométrie de surface dans le fond de la douille évidée est varié autour d'une ligne centrale du boulon ;
surveiller un faisceau (58) réfléchi ou réfracté ;
déterminer la géométrie de surface du fond de la douille évidée à partir du faisceau (58) réfléchi ou réfracté le plus fort ;
ajuster le réseau phasé (34) pour opérer à une combinaison de paramètres de commande qui produit un faisceau optimisé (38, 40) pour la géométrie de surface déterminée dans l'étape de détermination précédente qui a produit le faisceau réfléchi ou réfracté le plus fort ; et
effectuer un balayage d'un volume du boulon en utilisant le faisceau optimisé (38, 40) pour déterminer tout défaut dans le boulon (10).

2. Procédé selon la revendication 1, dans lequel un point d'entrée de son du faisceau (38, 40) sur le boulon (10) se trouve dans la douille évidée (20).

3. Procédé selon la revendication 1, dans lequel les étapes de balayage et surveillance sont effectués avec le même transducteur (34).

4. Procédé selon la revendication 1, dans lequel le transducteur (34) est un réseau linéaire de transducteurs ultrasoniques.

5. Procédé selon la revendication 1, dans lequel l'étape consistant à effectuer un balayage comporte l'étape consistant à tourner le transducteur ultrasonique (34) à réseau phasé de 360 degrees autour de la ligne centrale du boulon (56).

6. Procédé selon la revendication 1, dans lequel l'étape d'ajustage comporte l'étape consistant à calculer les paramètres de commande qui produisent le faisceau optimisé (38, 40) à base de la géométrie de surface déterminée dans l'étape précédente de détermination.
